# FASCICULE DE BREVET EUROPEEN

(11) **EP 1 899 950 B1**
(45) Date de publication et mention de la délivrance du brevet: **24.07.2013**
(21) Numéro de dépôt: 06708650.4
(22) Date de dépôt: 06.03.2006
(51) Int. Cl.: G07F 7/08, G06Q 20/02, G06Q 20/32, G06Q 20/40

(54) **PROCEDE DE SECURISATION D'UNE TRANSACTION AVEC UNE CARTE DE PAIEMENT ET SERVEUR D'ACTIVATION POUR LA MISE EN OEUVRE DE CE PROCEDE**
VERFAHREN ZUR SICHERUNG EINER TRANSAKTION MIT EINER BEZAHLUNGSKARTE UND AKTIVIERUNGSSERVER ZUR IMPLEMENTIERUNG DES VERFAHRENS
METHOD FOR SECURING A TRANSACTION WITH A PAYMENT CARD AND ACTIVATION SERVER FOR IMPLEMENTATING THE METHOD

(30) Priorité: 04.03.2005 FR 0502229
(43) Date de publication de la demande: 19.03.2008
(73) Titulaire: Barret, Patrick, 75016 Paris (FR)
(72) Inventeur: POILPOT, Loïc, F-63800 Saint Bonnet Les Alliers (FR); Barret Patrick, 75016 Paris (FR)
(74) Mandataire: Le Forestier, Eric
(86) Numéro de dépôt international: PCT/EP2006/060478
(87) Numéro de publication internationale: WO 2006/092446

(56) Documents cités:
- WO-A-02/058017
- US-A1- 2001 047 330
- US-A1- 2003 135 462
- US-A1- 2004 007 618

## Description

La présente invention concerne d'une façon générale le domaine des transactions par cartes, et plus spécifiquement un procédé permettant d'améliorer la sécurité de transactions notamment financières effectuées par carte.

On sait qu'une carte de transaction, qu'elle soit bancaire, de paiement de crédit ou de fidélisation, est utilisée au plus quelques minutes par jour, alors qu'elle est potentiellement utilisable 24 heures sur 24.

Cette activation permanente est une fragilité en cas de vol ou de perte, notamment entre le moment ou le porteur constate la disparition de sa carte et celui où il fait opposition selon les procédures afférentes au type de carte.

Cette fragilité est encore plus grande dans le cas d'un paiement sur Internet, ou plus généralement dans le cas d'une vente à distance classique par téléphone, où il n'est pas besoin de disposer physiquement de la carte, mais seulement de ses numéros.

Des transactions frauduleuses sur Internet ou en vente à distance, peuvent donc se faire à l'insu d'un porteur de carte, qui ne constate la fraude qu'à réception de son relevé de compte. Le droit commercial protège en principe l'utilisateur, mais la fraude existe et c'est à frein au développement des transactions en ligne.

La présente invention vise à pallier ces inconvénients de l'état de la technique et à ajouter un degré de sécurité aux paiements par carte conventionnels, sans remettre en cause les processus de sécurisation existants.
Elle propose à cet effet selon un premier aspect un procédé de sécurisation d'une transaction de paiement réalisée à l'aide d'une carte de paiement selon la revendication 1 annexée.

Selon un deuxième aspect, on propose selon l'invention un serveur d'activation selon la revendication 9 annexée.

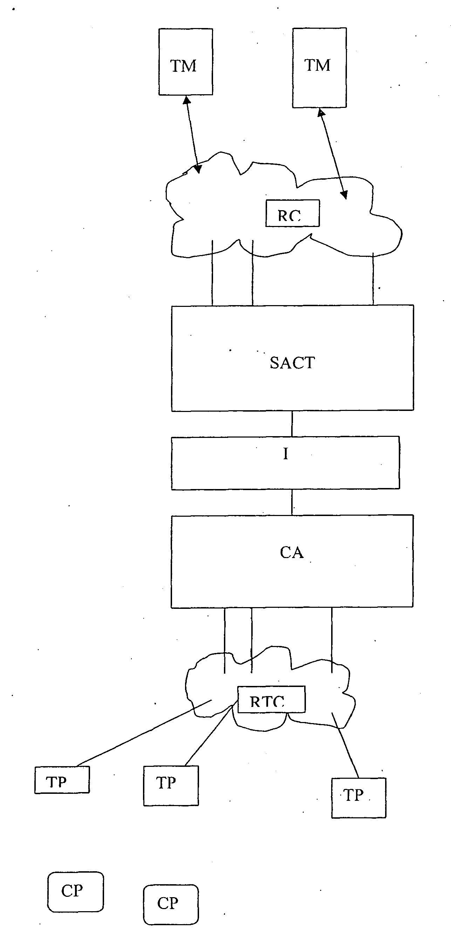

D'autres aspects, buts et avantages de la présente invention apparaîtront mieux à la lecture de la description détaillée suivante des formes de réalisation préférée de celle-ci, donnée à titre d'exemple non limitatif et faite en référence au dessin annexé, sur lesquels la figure unique illustre schématiquement une architecture de système de paiement susceptible de mettre en oeuvre le procédé de l'invention.

Ce procédé consiste tout d'abord à prevoir une carte de transaction ou de paiement en tout point identique aux cartes habituelles, sauf sur un point : elle est inactive à l'état normal. Elle est repérée dans les bases de données de l'émetteur comme étant en service, mais inactive et donc inutilisable en l'état : par défaut, un paiement avec cette carte ne sera pas autorisé.

En cas de vol, le voleur ne pourra donc pas s'en servir. Une personne mal intentionnée ne pourra pas davantage se servir des numéros pour une transaction sur Internet.

Pour pouvoir utiliser la carte pour une transaction, il est nécessaire de préalablement procéder à son activation par une opération spécifique. Cette activation permet de rendre la carte active et donc utilisable pendant une durée déterminée, limitée, à l'issue de laquelle la carte est ramenée, dans le système d'information de l'émetteur, à l'état inactif. Il faudra alors une nouvelle activation pour pouvoir s'en servir à nouveau.

Selon un aspect de l'invention, l'activation de la carte pour une transaction s'effectue par des voies différentes de celles des réseaux monétiques utilisés pour autoriser les transactions. De ce fait, les réseaux monétiques et les terminaux accepteurs n'ont pas besoin d'être modifiés et continueront à être utilisés de la même manière qu'actuellement. De la sorte, cette carte activable peut être proposée aux porteurs, et utilisée dans le réseau monétique actuel, sans modification de ce dernier.

Par terminaux accepteurs, il faut entendre : les terminaux de paiement électronique chez les commerçants, les distributeurs automatiques de billets de banque (DAB), mais aussi distributeurs de billets de train, de spectacle, etc.

Si la carte est activée, selon l'un des processus qui vont être décrits ci-dessous, elle est reconnue comme une carte classique et la transaction a lieu. Si elle n'est pas activée, elle n'est pas reconnue par le centre d'autorisation du porteur, et la transaction est donc refusée.

On peut prévoir l'un parmi différents processus d'activation. Mais quelques soient les processus d'activation proposés par l'émetteur de cartes, tous devront permettre une identification/ authentification du demandeur d'activation, pour s'assurer qu'il s'agit bien d'une demande émanant du porteur.

En outre, plusieurs processus peuvent être proposés simultanément, certains venant en secours du processus choisi comme processus de base habituel, comme on le décrira en détail plus loin.

Par exemple, si un processus de base utilise le téléphone portable comme on va le décrire dans la suite, alors en cas de perte de ce dernier, le porteur de carte pourra quand même utiliser sa carte grâce à un processus de secours préprogrammé.

On va maintenant décrire un certain nombre d'exemples non limitatifs de processus d'activation d'une carte de transaction pendant une durée limitée. Presque tous sont utilisables partout dans le monde, et sont indépendants des systèmes de transaction proprement-dits. La carte activable peut donc être proposée aux porteurs de cartes internationales.

On prévoit selon l'invention des processus d'activation dits de base, faisant appel à des moyens de communication évolués, que l'on va maintenant décrire.

Un premier processus d'activation de base met en jeu un appel à partir d'un téléphone fixe : à la souscription du contrat, le porteur donne son numéro de téléphone fixe. Ce numéro de téléphone sera couplé, dans le système d'information de l'émetteur, au numéro de carte à activer.

L'émetteur de carte fournit au porteur un numéro de téléphone à appeler pour accéder au serveur d'activation. L'activation se fait à partir du domicile en appelant ce numéro. L'authentification peut se contenter d'identifier le numéro appelant, ou demander la saisie d'un code sur le clavier du téléphone fixe. La durée d'activation peut être préprogrammée ou définie à chaque appel par un dialogue clavier téléphonique/serveur d'activation, le serveur d'activation ayant alors de préférence une fonction de serveur vocal pour guider l'utilisateur.

Un second exemple de processus d'activation de base met un jeu un téléphone mobile : le procédé est pratiquement le même que celui pour le téléphone fixe, mais l'usage en est beaucoup plus souple, puisque l'appel au serveur d'activation pourra se faire de n'importe où, et notamment dans la rue devant un distributeur automatique de billets, quelques instants avant d'introduire sa carte dans l'appareil, dans une boutique avant de passer à la caisse, dans un restaurant juste avant de demander l'addition, etc.

L'authentification peut éventuellement être renforcée par la frappe d'un code au clavier, et/ou l'envoi d'un message préprogrammé typiquement de type SMS contenant.par exemple les premiers numéros de la carte.

L'activation à partir d'un téléphone mobile peut se faire aussi entièrement par envoi d'un SMS. Le serveur d'activation est alors de préférence conçu pour renvoyer un SMS d'accusé de réception pour informer le porteur que sa carte est bien activée.

Pour sécuriser encore davantage le processus, on peut prévoir que l'émetteur effectue une télétransmission périodique, vers le téléphone mobile de l'utilisateur, de données chiffrées à intégrer dans un SMS pour en renforcer l'authenticité. En variante et/ou en complément, la sécurisation peut être assurée en lisant le numéro de téléphone mobile de l'émetteur conventionnellement encapsulé dans le SMS émis.

L'activation par téléphone mobile est celle qui, dans l'état de l'art à la date de dépôt de la présente demande, celle qui offre la plus grande souplesse d'utilisation et qui est donc préférée.

Un exemple d'architecture sur laquelle les processus ci-dessus peuvent être mise en oeuvre est globalement illustré sur la figure. Cette architecture comprend un centre d'autorisation conventionnel CA, qui est relié, typiquement via le réseau téléphonique commuté RTC, avec une pluralité de terminaux de paiement TP susceptibles de lire des cartes de paiement CP.

Chaque possesseur d'une carte CP possède également un téléphone (ici un téléphone mobile TM) susceptible d'entrer en communication (ici via le réseau cellulaire RC) avec un serveur d'activation SACT.

Le centre d'autorisation CA est interfacé (interface I) avec le serveur d'activation SACT pour remplir la fonction précitée de vérification du caractère activé ou non activé d'une carte donnée.

Le cas échéant, le centre d'autorisation et le serveur d'activation peuvent être hébergés sur une plateforme technique commune.

De retour aux fonctionnalités de l'invention, on notera que, pour pallier la perte ou le vol du téléphone portable de l'utilisateur, il est prudent de prévoir la souscription d'un processus de secours comme par exemple une activation par courrier électronique ou une activation préprogrammée (voir plus loin).

Un troisième exemple d'un processus d'activation de base selon l'invention est l'activation via Internet : le porteur accède par Internet, de préférence à l'aide d'un navigateur standard, au système d'information de l'émetteur avec les mêmes niveaux de sécurité que ceux proposés par les transactions bancaires en ligne. Avantageusement, l'interface utilisateur est conçue pour permettre une activation très précise de la carte avec des critères plus détaillés comme par exemple un plafond de transaction, ou le montant de la transaction que l'on s'apprête à faire, un type de transaction, l'indication de la banque créditrice, etc.

Ce troisième exemple d'activation selon l'invention est particulièrement adapté au cas des paiements par Internet..

Mais grâce aux nouveaux types de terminaux mobiles permettant l'accès nomade à Internet, ce système peut aussi être activé à partir d'un terminal mobile, que ce soit un téléphone, un assistant numérique personnel, un terminal de type « Blackberry », un micro-ordinateur portable connecté à des réseaux publics sans fil, etc.

Les processus tels que décrits ci-dessus peuvent bien entendu être enrichis par l'homme du métier de façon à en améliorer encore la sécurité.

Par exemple, on peut prévoir des cartes de paiement plus élaborées, contenant par exemple un système de double identification entre la carte elle-même et le terminal d'où est effectué l'appel au serveur d'activation. Dans ce cas, l'activation d'une carte ne peut être effectuée, pour une carte donnée, qu'à partir d'un terminal désigné, chacun devant reconnaître l'identité de l'autre avant de lancer l'appel d'activation.

Par exemple la carte de paiement est construite non pas sur un support inerte, mais sur un support contenant une étiquette transpondeuse dite RFID, le terminal mobile comprend de son côté un lecteur RFID intégré. Les mémoires du terminal mobile et de l'étiquette RFID portée par la carte de paiement contiennent les identités respectives du terminal et de la carte. Il faut rapprocher la carte de l'appareil mobile pour que l'identification de préférence biunivoque se fasse entre la carte et le terminal mobile. Et ce n'est que dans le cas où la double identification est réussie que le terminal mobile lance l'appel au serveur d'activation.

On comprend que le système de carte activable, est un système qui permet au porteur de disposer d'un niveau supplémentaire de protection, sans interférer sur les autres protections, que ce soient celles des banques ou des commerçants, et ceci dès qu'une transaction par carte de paiement implique l'appel d'un centre serveur d'autorisation.

Dans le cas des transactions de paiement dites « off-line », c'est à dire où le terminal de paiement gère la transaction sans appeler un centre d'autorisation pour vérifier la solvabilité du porteur, le mécanisme d'activation est certes inopérant, mais ce type de transaction se produit en général pour des petits montants ou encore pour des micro-paiements par exemple dans des parkings, péages d'autoroute, etc.

Une deuxième catégorie de processus d'activation regroupe des processus qui permettront d'activer sa carte selon un mode de secours, donc de pouvoir l'utiliser en cas de dysfonctionnement toujours possible des systèmes plus élaborés décrits plus haut.

Cette deuxième catégorie comprend notamment :
- une demande d'activation par courrier, et de préférence par télécopie ou par courrier électronique : le porteur écrit au service gestionnaire de sa carte pour demander l'activation pour une période limitée ; on assure l'authentification du demandeur par tout moyen approprié, tel que code secret prédéfini.
- une activation prédéfinie : à la signature du contrat de fourniture de la carte activable, le porteur choisit un rythme d'activation automatique selon un calendrier plus ou moins complexe en fonction des usages qu'il compte en faire. Par exemple, l'activation se fera automatiquement tous les jours pendant une heure de 10 h à 11 h, ou alors toutes les heures pendant 5 minutes, ou bien encore 2 heures le samedi matin, rien le dimanche, 1 heure par jour les jours de semaine, etc. Tous les profils sont envisageables. Le porteur n'a alors aucune manoeuvré à effectuer pour activer la carte. Il doit simplement se souvenir des plages d'activation prédéfinies. Ce système peut être proposé systématiquement ou sur demande en secours d'une activation de base défaillante (panne de réseau téléphonique cellulaire, défaillance des équipements de communication externe du serveur d'activation, etc.).

De nombreuses variantes et modifications peuvent être apportées à l'invention.

## Revendications

1. Procede de sécurisation d'une transaction de paiement réalisée a l'aide d'une carte de paiement (CP), ladite transaction impliquant une communication avec un centre d'autorisation de paiement (CA) et ne pouvant être effectuée que lcrsqu'une autorisation est donnee par ledit centre, le procede comprenant la mise en oeuvre d'un serveur d'activation, (SAGT) dans lequel est mémorisé, en association avec chaque carte de paiement (CP), un identificateur d'activation, et les étapes suivantes :
- lorsqu'un, paiement avec une carte de paiement (CP) est envisagé, authentification par etablissement d'une communication téléphonique a l'initiative du possesseur de la carte avec le serveur d'activation (SACT), et fourniture audit serveur d'un identificateur obtenu ou genéré de façon indépendante de la carte elle-même et visant à activer la carte de paiement (CP) pour une durée limitee,
- au niveau du serveur d'activation (SACT), si l'identificateur reçu correspond à l'identificateur d'activation mémorisé, activation de la carte de paiement CP) pour ladite durée limitée,
- lors de la transaction avec la carte de paiement (CP) en question, établissement d'une communication entre le centre d'autorisation (CA) et le serveur d'activation (SACT), le centre d'autorisation (CA) ne délivrant ure autorisation que si la carte de paiement (CP) est activée,
**caractérisé en ce que** l'authentification consiste en l'identification du numéro appelant, l'identificateur d'activation comprenant un numéro d'appel d'un équipement téléhonique du possesseur.

2. Procédé selon la revendication 1, **caractérisé en ce que** l'authentification est renforcée par la frappe d'un code sur un clavier et/ou l'envoi d'un message préprogrammé.

3. Procédé selon l'une des revendications 1 à 2, **caractérisé en ce qu'**il comprend en outre, lors de l'activation de la carte pour une durée limitée, l'envoi d'un message au possesseur de la carte, confirmant ladite activatiion.

4. Procédé selon la revendication 3, **caractérisé en ce que** ledit message est un message alphanumérique.

5. Procédé selon l'une des revendications 1 à 4, **caractérisé en ce qu'**il comprend, en cas de défaillance dans l'établissement de la comnunication à l'initiative du possesseur de la carte avec le serveur d'activation (SACT), l'établissement d'une communication de secours avec ledit serveur d'activation (SACT).

6. Procédé selon l'une des revendications 1 à 4, **caractérisé en ce qu'**il comprend, en cas de défaillance dans l'établissement de la communication à l'initiative du possesseur de la carte avec le serveur d'activation (SACT), l'activation automatique de la carte de paiement (CP) selon un calendrier prédéfini de plages d'activation.

7. Procédé selon l'une des revendications 1 à 6, **caractérisé en ce que** le serveur d'activation (SACT) et le centre d'autorisation (CA) comprennent une plateforme technique commune.

8. Procédé selon l'une des revendications 1 à 7, **caractérisé en ce que** la communication avec le serveur d'activation (SACT) à l'initiative du possesseur est établie via un lien de communication choisi parmi la téléphonie fixe et la téléphonie mobile.

9. Serveur d'activation (SACT) pour des paiements par cartes de paiement, comprenant des moyens de communication avec un centre d'autorisation (CA) de paiements par cartes de paiement (CP), **caractérisé en ce qu'**il comprend en outre des moyens de mise en oeuvre d'une communication téléphonique à l'initiative du possesseur de la carte et des moyens d'identification du numéro appelant pour la mise en oeuvre d'un procédé selon l'une des revendications 1 à 8.

## Patentansprüche

1. Verfahren zur Sicherung eines mit Hilfe einer Bezahlungskarte (CP) erfolgenden Zahlungsvorgangs, wobei der genannte Vorgang eine Kommunikation mit einem Zahlungsautorisierungszentrum (CA) verwendet und erst erfolgen kann, wenn eine Autorisation durch das genannte Zentrum erteilt wurde, wobei das Verfahren die Anwendung eines Aktivierungsservers (SACT) umfasst, in dem in Verbindung mit jeder Bezahlungskarte (CP) eine Aktivierungskennung gespeichert ist, sowie die folgenden Schritte:
- wenn eine Zahlung mit einer Bezahlungskarte (CP) beabsichtigt ist, die Authentifizierung durch Herstellung einer Telephonverbindung durch den Karteninhaber mit dem Aktivierungsserver (SACT) und Angabe einer erhaltenen oder unabhängig von der Karte selbst erzeugten Kennung an den Server mit dem Ziel der Aktivierung der Bezahlungskarte (CP) für eine begrenzte Zeit,
- beim Aktivierungsserver (SACT), wenn die empfangene Kennung der gespeicherten Aktivierungskennung entspricht, Aktivierung der Bezahlungskarte (CP) für die genannte begrenzte Zeit,
- beim Zahlungsvorgang mit der fraglichen Bezahlungskarte (CP), Herstellung einer Verbindung zwischen dem Autorisierungszentrum (CA) und dem Aktivierungsserver (SACT), wobei das Autorisierungszentrum (CA) eine Autorisation nur ausgibt, wenn die Bezahlungskarte (CP) aktiviert ist,
**dadurch gekennzeichnet, dass** die Authentifizierung in der Identifizierung der anrufenden Rufnummer besteht, wobei die Aktivierungskennung eine Rufnummer einer Telephoneinrichtung des Inhabers umfasst.

2. Verfahren nach Patentanspruch 1, **dadurch gekennzeichnet, dass** die Authentifizierung durch die Eingabe eines Passwortes mit Hilfe einer Tastatur und/oder die Absendung einer vorprogammierten Meldung verstärkt wird.

3. Verfahren nach einem der Patentansprüche 1 bis 2, **dadurch gekennzeichnet, dass** es außerdem bei der Aktivierung der Karte für eine begrenzte Zeit die Aussendung einer Meldung an den Karteninhaber umfasst, die die genannte Aktivierung bestätigt.

4. Verfahren nach Patentanspruch 3, **dadurch gekennzeichnet, dass** die genannte Meldung eine alphanumerische Meldung ist.

5. Verfahren nach einem der Patentansprüche 1 bis 4, **dadurch gekennzeichnet, dass** es im Fall des Scheiterns der Herstellung einer Verbindung mit dem Aktivierungsserver (SACT) durch den Karteninhaber die Herstellung einer Hilfsverbindung mit dem genannten Aktivierungsserver (SACT) umfasst.

6. Verfahren nach einem der Patentansprüche 1 bis 4, **dadurch gekennzeichnet, dass** es im Fall des Scheiterns der Herstellung einer Verbindung mit dem Aktivierungsserver (SACT) durch den Karteninhaber die automatische Aktivierung der Bezahlungskarte (CP) nach einem vorab festgelegten Kalender von Aktivierungszeiten umfasst.

7. Verfahren nach einem der Patentansprüche 1 bis 6, **dadurch gekennzeichnet, dass** der Aktivierungsserver (SACT) und die Autorisierungszentrale (CA) über eine gemeinsame technische Einrichtung verfügen.

8. Verfahren nach einem der Patentansprüche 1 bis 7, **dadurch gekennzeichnet, dass** die Verbindung mit dem Aktivierungsserver (SACT) durch den Inhaber über eine Fernmeldeverbindung hergestellt wird, die unter Festleitungstelephon- und Mobiltelephonverbindung gewählt wurde.

9. Aktivierungsserver (SACT) für Zahlungen mit Bezahlungskarten, Mittel für die Kommunikation mit einem Autorisierungszentrum (CA) für Zahlungen mit Bezahlungskarten (CP) umfassend, **dadurch gekennzeichnet, dass** er außerdem Mittel zur Anwendung einer Telephonverbindung durch den Karteninhaber umfasst und Mittel zur Identifizierung der anrufenden Rufnummer zur Anwendung eines Verfahrens nach einem der Patentansprüche 1 bis 8.

## Claims

1. A method for securing a payment transaction made with a payment card (CP), said transaction involving a communication with a payment authorization center (CA) and being made possible only when an authorization is provided by said center, the method comprising the operation of an activation server (SACT) in which is stored, in association with each payment card (CP), an activation identifier, and the following steps:
- when a payment with a payment card (CP) is contemplated, authentication by establishing at the initiative of the cart owner a phone communication with the activation server (SACT), and provision to said server of an identified obtained or generated independently from the card itself and aiming at activating the payment card (CP) for a limited time period,
- at the activation server (SACT) if the received identifier corresponds to the stored activation identifier, activation of the payment card (CP) for said limited time period,
- when the transaction with the payment card at stake is made, establishment of a communication between the authorization center (CA) and the activation server (SACT), the authorization center (CA) delivering an authorization only if the payment card is activated,
**characterized in that** the authentication consists in identifying the calling number, the activation identifier comprising a calling number of the owner's telephone equipment.

2. A method according to claim 1, **characterized in that** the authentication is strengthened by inputting a code on a keyboard and/or the transmission of a pre-programmed message.

3. A method according to any one of claims 1 to 2, **characterized in that** it further comprises, when the card is activated for a limited time period, the transmission of a message to the card owner, confirming said activation.

4. A method according to claim 3, **characterized in that** said message is an alphanumeric message.

5. A method according to any one of claims 1 to 4, **characterized in that** it comprises, in case of failure in the establishment at the initiative of the card owner of the communication with the activation server (SACT), the establishment of backup communication with the activation server (SACT).

6. A method according to any one of claims 1 to 4, **characterized in that** it comprises, in case of failure in the establishment at the initiative of the card owner of the communication with the activation server (SACT), the automatic activation of the payment card (CP) according to a predefined schedule of activation time ranges.

7. A method according to any one of claims 1 to 6, **characterized in that** the activation server (SACT) and the authorization center (CA) include a common technical platform.

8. A method according to any one of claims 1 to 7, **characterized in that** the communication with the activation server (SACT) at the initiative of the owner is established via a communications link selected among fixed telephone communications and mobile telephone communications.

9. An activation server (SACT) for payments with payment cards, comprising communications means with an authorization center (CA) for payments with payment cards (CP), **characterized in that** it further comprises means for effecting a telephone communication at the initiative of the card owner and means for identifying the calling number for implementing the method according to any one of claims 1 to 8.
